# EUROPEAN PATENT SPECIFICATION

(11) **EP 0 628 982 B1**
(45) Date of publication and mention of the grant of the patent: **14.01.1998**
(21) Application number: 94114636.7
(22) Date of filing: 12.10.1988
(51) Int. Cl.: H01J 1/30, H01J 31/12

(54) **Driving method for electron beam emitting devices**
Steuerverfahren elektronenermittierender Vorrichtungen
Procédé de commande pour des dispositifs émetteurs de faisceaux d'électrons

(30) Priority: 12.10.1987 JP 254557/87
(43) Date of publication of application: 14.12.1994
(62) Divisional of application: 88116926.2
(73) Proprietor: CANON KABUSHIKI KAISHA, Tokyo (JP)
(72) Inventor: Suzuki, Hidetoshi, Atsugi-shi, Kanagawa-ken (JP); Nomura, Ichiro, Sanihaitsu Chuorinkan 303, Yamato-shi, Kanagawa-ken (JP); Kaneko, Tetsuya, Yokohama-shi, Kanagawa-ken (JP); Takeda, Toshihiko, Tokyo (JP); Banno, Yoshikazu, Atsugi-shi, Kanagawa-ken (JP); Yokono, Kojiro, Yokohama-shi, Kanagawa-ken (JP)
(74) Representative: Weser, Wolfgang

(56) References cited:
- EP-A- 0 301 545
- US-A- 3 611 077
- RADIO ENGINEERING AND ELECTRONIC PHYSICS, vol.10, 1965, WASHINGTON USA pages 1290 - 1296 M ELINSON ET AL. 'The emission of hot electrons and the field emission of electrons from tin oxide'

## Description

### BACKGROUND OF THE INVENTION

### Field of the invention

This invention relates to a method for driving electron beam emitting devices which comprise the device features defined in claim 1 and to a method for driving an image displaying device comprising such electron beam emitting devices. Such a method is described in EP-A-301 545 to be considered within the meaning of EPC Article 54(3) and (4).

### Related Background Art

In recent years, in the field of information instruments or TV receiver for domestic use, thin type image displaying device with good visual recognition has been demanded. In the prior art, as thin type image displaying device, there have been developed, for example, liquid crystal displaying device, EL displaying device, plasma display panel, etc., but these involve problems in visual angle, color formation, luminosity, etc., and they cannot be said to satisfy the performances demanded by the market under the present situation.

Whereas, in the prior art, as the device capable of obtaining emission of electrons with a simple structure, there has been known, for example, the cold cathode-ray device reported by M.I. Elinson [Radio Eng. Electron. Phys. vol. 10, 1290 - 1296, 1965]. This utilizes the phenomenon that electron emission occurs by passing current through the thin film with small area formed on a substrate in parallel to the thin surface, and is generally called the surface conduction type of thin film device.

As such surface conduction type of thin film device, one by use of the SnO₂(Sb) thin film developed by Elinson et al as mentioned above; one by use of Au thin film [G. Dittmer: "Thin Solid Films", vol. 9, p. 317, 1972]; one by use of ITO film [M. Harwell and C.G. Fonstad: "IEEE Trans. ED Conf.", p. 519, 1975]; and one by use of carbon thin film [Hisashi Araki et al: "Vacuum", vol. 26, No. 1, p. 22, 1983] have been reported.

These surface conduction type devices have the following advantages:
1) High electron emitting efficiency can be obtained.
2) Simple structure affords easy production.
3) A large number of devices can be formed (multi-formation) on the same substrate.

Accordingly, if these surface conduction type of thin film devices can be utilized as the electron generating source for the flat plate type CRT image displaying device, an image displaying device more excellent in visual angle, color formation, luminosity and further in low consumption power, etc. as compared with the flat plate type CRT displaying device can be provided.

However, when the surface conduction type of thin film device is attempted to be utilized for the electron generating source of an image displaying device, if the surface conduction type of thin film devices are provided in the same number as the displaying picture elements for excitation of phosphor, the number of the devices will become enormous, whereby the production yield will be lowered to result in increased cost. On the other hand, if the whole image surface is scanned by use of a single device, the device constitution will become complicated similarly as in the case of CRT of the prior art, as suggested in US-A-36 11 077, whereby it impossible to realize thinning of the device.

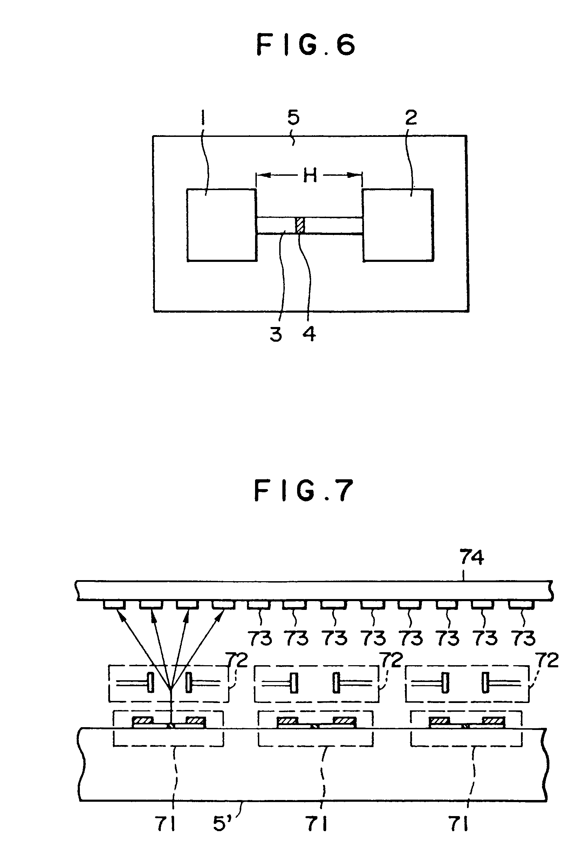

Accordingly, as an idea of compromise, if some picture elements to some 10 picture elements are allocated for one device, it becomes possible to ballance well both the production yield of the device and thinning of the device at high level. However, even in that case, for scanning of electron beam, deflectors are required to be equipped for each device, and yet the deflector of the prior art had a complicated electrode shape as shown in Fig. 7, and therefore it has been difficult to make it fine or constitute them in multiple forms. In the Figure, 71 encircled with dotted line shows one device of the surface conduction type discharging device, 72 encircled similarly with dotted line shows one deflector, 73 is one picture element of emitting member and 74 is a glass plate.

According to an own proposal in EP-A-312 007 (Application Number 88 116 926.2), the grant thereof being imminent, and from which the present application has been divided out, the aforementioned needs have been met by an electron beam emitting device comprising a surface conduction type of thin film device having an electron emitting area and a pair of electrodes for passing current through the electron emitting area, and being characterized by a voltage applying means for applying independent voltage on each of said electrodes so that each of said electrodes may become higher or lower in potential relative to the other electrode. Said own proposal being also directed to an image displaying device comprising such an electron beam emitting device and at least one light emitting member which draws an image by emitting light when irradiated by an electron beam emitted from said electron beam emitting device.

### SUMMARY OF THE INVENTION

The present invention is directed to a driving method for electron beam emitting devices and an image displaying device in particular of the type as defined in the said own proposal.

Accordingly, the invention provides a driving method of electron beam emitting devices as defined in claim 1.

Furthermore, the invention provides a driving method of an image displaying device comprising such electron beam emitting devices.

### BRIEF DESCRIPTION OF THE DRAWINGS

Fig. 1 is a partial illustration showing an image displaying device as used in the method of the present invention;
Fig. 2, Fig. 3 and Fig. 4 are partial illustrations showing other embodiments of the displaying device;
Fig. 5A, Fig. 5B and Fig. 6 are illustrations showing the constitution of the surface conduction type of thin film device; and
Fig. 7 is an illustration of the image displaying device by use of the surface conduction type of thin film device of the prior art.

### DETAILED DESCRIPTION OF THE PREFERRED EMBODIMENTS

In the method of the present invention, a surface conduction type of thin film device is used as the electron beam emitting source, and for the surface conduction type of thin film device itself, all of those known in the art can be utilized, and its device constitution and shape are not particularly limited, so long as they do not interfere with the driving method according to the present invention.

An example of the surface conduction type of thin film device to be used in the present method is shown in Fig. 6. In Fig. 6, 1 and 2 are electrodes for obtaining electrical connection, 3 is a thin film formed of an electron emitting material, 5 shows a substrate and 4 an electron emitting area.

In the above surface conduction type of thin film device, as the method for forming the electron emitting area 4, for example, there may be included the method according to current passage heat treatment called forming in which current is passed through the thin film 3 by applying voltage between the above electrodes 1 and 2 to destroy, deform or denature locally the thin film 3 with Joule's heat generated thereby, thus forming an electron emitting area 4 made to electrically high resistant state to obtain electron emitting function, or the method to obtain electron emitting function without passing through the forming step by dispersion arrangement of fine particles comprising a metal or oxide, etc. at the fine interval portion 3 between a pair of confronting electrodes 1, 2 having a fine interval, but these methods are not limitative of the invention, the electron emitting area may be formed according to any method, provided that sufficient electron discharge can be realized.

Further, for the substrate 5 in the surface conduction type of thin film device to be used in the present method for example, an insulating material such as glass, quartz, etc. may be employed. The thickness of the substrate may be about some 100 µm to 1 mm, and when it is used also as the back plate as described below, a thickness of around 5 mm may be preferred.

The electrodes 1 and 2 can be formed according to, for example, the methods conventionally employed in vacuum vapor deposition process and photolithographic process, etc. The materials for the electrodes 1 and 2 may be general electroconductive materials, including metals such as Ni, Al, Cu, Au, Pt, Ag, etc. and metal oxides such as SnO₂, ITO, etc.

The thickness of the electrode may be suitably some 10 nm (100 Å) to several µm, preferably 0.01 to 2 µm.

The interval between the electrodes 1 and 2, namely the electrode gap H may be from 0.1 µm to several µm, but the present invention is not limited thereto.

As to the shape of electrodes 1 and 2, it is not particularly limited, provided that electron discharge with good efficiency can be realized.

Formation of the electron emitting area 4 between the electrodes 1 and 2 can be practiced by forming the thin film 3 according to vacuum deposition, etc. by use of an electron emitting material, for example, a metal oxide such as In₂O₃, SnO₂, PbO, etc. a metal such as Ag, Pt, Al, Cu, Au, etc., carbon and other various semiconductors, etc. and applying forming treatment thereto similarly as in the prior art.

As another method for forming the electron emitting area 4, there may be also employed the method in which a dispersion containing fine particles of the above electron emitting material dispersed in a dispersing medium is coated on the substrate by dipping or spin coating, etc., followed by calcination. As the dispersing medium in this case, any medium capable of dispersing fine particles without denaturation, such as butyl acetate, alcohols, methyl ethyl ketone, cyclohexane and mixtures of these, etc. The fine particles should have particle sized preferably of some nm (10 Å) to several µm.

The electron beam emitting device generates electron beam by applying voltage between the electrodes 1 and 2 of the above surface conduction type of thin film device, thereby passing current through the electron emitting area 4, and such means for applying voltage can apply voltage so that, for example, the electrode 1 may be higher or lower in potential relative to the electrode 2. That is, the first specific feature resides in that the direction of current flowing through the electron emitting area 4 can be reversed at any suitable time from the electrode 1 → 2 direction to the electrode 2 → 1 direction, and further the second specific feature of the above means for applying voltage resides in that the voltage applied between the electrodes 1 and 2 can be made variable.

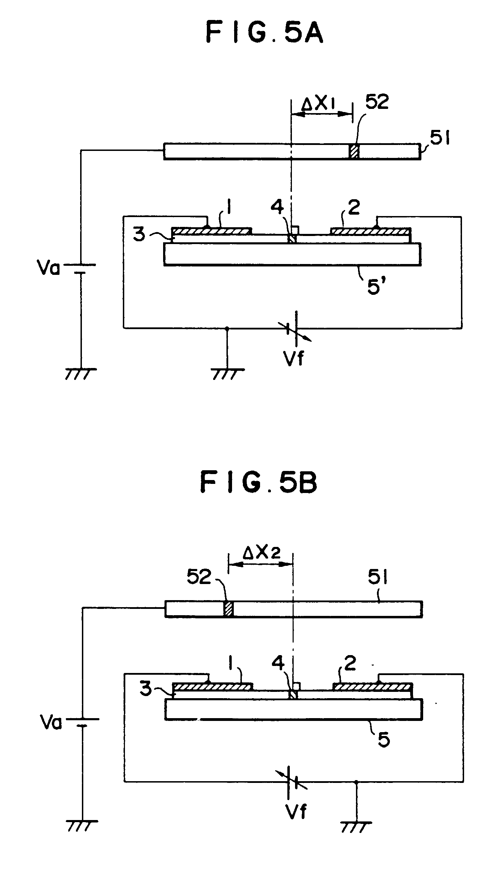

It has been found by preceding experiments, that there is the relationship as shown in Fig. 5 between the voltage applied between the two electrodes and the track of electron beam in the surface conduction type releasing device.

In Figs. 5A and 5B, 1 and 2 are electrodes provided for applying voltage, 3 is a thin film of a material such as metal or metal oxide as described above (depending on the material of the thin film 3, the same material as electrodes 1 and 2 may be also used), 4 is an electron emitting area formed by applying treatment called forming known in the art on the above thin film 3, and 5 is a substrate.

Also, 51 is the collector electrode for capturing electron beam discharged from the device and is coated on the surface with an organic resist for recording the site on which the electron beam is irradiated.

According to conducted experiments , as shown in the same Figure 5A, when a constant voltage Va was applied-on the collector electrode 51 and a voltage Vf between the electrodes 1 and 2 of the device (Va>Vf>0), the exposure point 52 of the resist was found to be at a position deviated toward the side of the electrode 2 than the normal line (broken line) of the electron emitting area 4. Besides, when the voltage Vf was varied at constant voltage of Va, it has been found that the displacement amount Δx₁ becomes greater as the voltage Vf is made greater. Also, as shown in the same Figure 5B, when the polarity of voltage applied between the electrodes 1 and 2 was reversed, the exposure point 52 was transferred to the side of the electrode 1, and similarly as in the case of Fig. 5A, the displacement amount Δx₂ became greater as the Vf was made greater.

The present method has been accomplished on the basis of the experimental results as described above. The displacement amount Δx by the applied voltage Vf will vary depending on the surface or size of the surface conduction type of thin film device, the material to be used for the thin film 3, the distance between the device and the collector electrode, the applied voltage Va at the collector electrode, etc., but the present invention is applicable to any case.

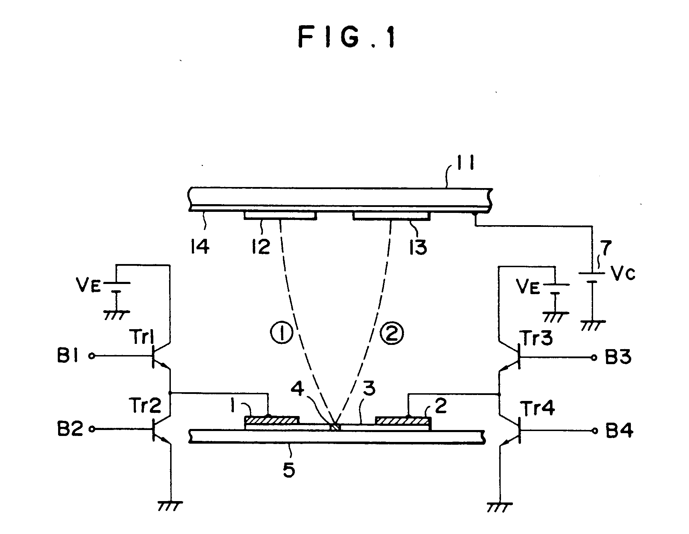

Fig. 1 is a partial illustration showing an embodiment of the image displaying device as used in the present method. It shows one of a large number of displaying units constituting the image displaying device. In the Figure, 1 to 4 are the same as in Fig. 5 as described above, showing the respective parts of the surface conduction type of thin film device. 5 and 11 consist of glass members shaped in plates, and constitute the back plate 5 and the face plate 11 of the image displaying device. A vacuum vessel is formed by the above back plate 5, the face plate 11 and side plates (not shown), and is internally maintained at a vacuum degree of around 1.33·10⁻⁴Pa (1 x 10⁻⁶ torr). On the inner surface of the face plate 11, light emitting members 12 and 13 are coated separately in mosaic with a transparent electrode 14 sandwiched therebetween.

On the above transparent electrode is applied from the high voltage power source 7 an acceleration voltage of, for example, Vc=10 kV.

In this image displaying device, the specific feature resides in reversing the voltage polarity applied between the electrodes of the surface conduction type of thin film device at any suitable time, namely reversing the direction of the current flowing through the electron emitting area 4 by applying a voltage between the electrodes 1 and 2 so that, for example, the electrode 1 may be higher or lower in potential relative to the electrode 2, and Tr1, Tr2, Tr3 and Tr4 shown in the Figure are transistors of the switching device for that purpose. The transistors Tr1 and Tr2 control the voltage applied on the electrode 1, while the transistors Tr3 and Tr4 control the voltage applied on the electrode 2. ON or OFF of switching of each transistor can be controlled externally through the base terminals B1 to B4.

In the present device, there exist three actuation states, namely:
(i) the electron beam emitted from the surface conduction type of thin film device flies along the track shown by ① in Fig. 1, whereby the light emitting member 12 emits light;
(ii) the electron beam emitted from the surface conduction type of thin film device flies along the track shown by ② in Fig. 1 (2), whereby the light emitting member 13 emits light; and
(iii) the surface conduction type device is not driven, whereby the electron beam becomes OFF to effect no emission.

It is determined by the actuations of the transistors Tr1 to Tr4 as shown in Table 1 whether either actuation state among these is taken.

**Table 1**

| | Electron Beam ① | Electron Beam ② | Electron Beam OFF |
|---|---|---|---|
| Tr1 | ○ | × | × |
| Tr2 | × | ○ | ○ |
| Tr3 | × | ○ | × |
| Tr4 | ○ | × | ○ |
| Note ○ : Transistor ON × : Transistor OFF | | | |

For example, when the transistors Tr1 and Tr4 are ON, Tr2 and Tr3 are OFF, V_{E}[V] is applied on the electrode 1 and 0[V] on the electrode 2 in Fig. 1, whereby the electron beams flies along the track ①, as apparently seen from the description for Fig. 5B as described above (actuation state (i)).

When the transistors Tr2 and Tr3 are ON, Tr1 and Tr4 are OFF, the voltages applied on the electrode 1, electrode 2 are reversed, whereby the electron beam is deflected toward the electrode 2 side and flies along the track ② (actuation state (ii)).

On the other hand, when the transistors Tr2 and Tr4 are ON, Tr1 and Tr3 are OFF, since 0[V] is applied on both of the electrode 1 and the electrode 2, no electron emission will occur (actuation state (iii)).

Accordingly, by applying an appropriate signal on the base terminals B1 to B4, one of the light emitting members 12 or 13 can be lighted selectively, or by repeating alternately the states (i) and (ii) for about 60 times per second, both picture elements can be displayed as if lighted in visual effect.

In an image displaying device practically prepared, the display units shown in the above Fig. 1 were juxtaposed in number of 200 x 200 in the vacuum vessel. By driving each unit independently, display of 200 x 400 picture elements is possible, which is very suitable for display of letters or figures.

Besides, while having a luminance of 342.5 cd/m² (100[ft-L]), the thickness of the device is as thin as about 3 cm.

Thus, according to Fig. 1, display of high luminance can be obtained with a very simple structure. Therefore, an information instrument terminal dealing with, for example, letters or figures can be provided at low cost.

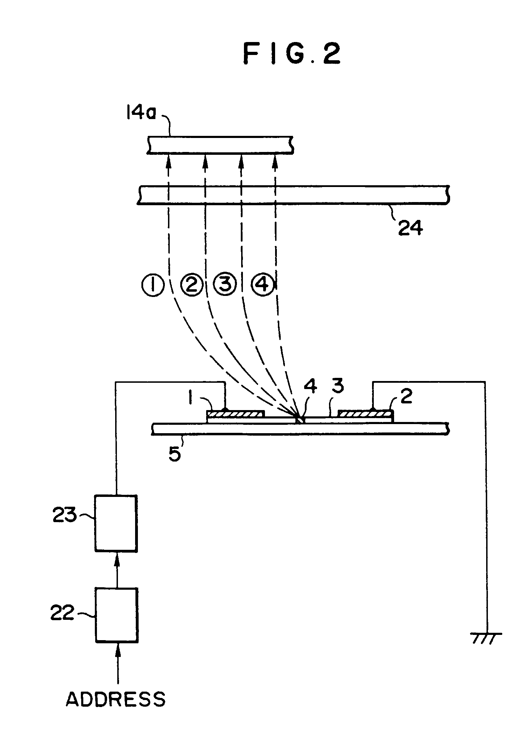

As the unit of the electron beam emitting device, it is also possible to use the form shown in Fig. 2 in combination. First, in Fig. 2, as the voltage to be applied on the surface conduction type of thin film device, the four kinds of combinations shown in Table 2 can be used, whereby a desired track of ① to ④ can be selected.

**Table 2**

| Electron Track | Applied Voltage at the electrode 1 | Applied Voltage at the electrode 2 |
|---|---|---|
| ① | V1 | 0 |
| ② | V2 | 0 |
| ③ | V3 | 0 |
| ④ | V4 | 0 |
| Note V1>V2>V3>V4>0 | | |

Also, by varying continuously the applied voltage, it is also possible to draw a line continuous through the -electrode 24 withdrawing the electrons emitted from the electron emitting area 4 onto the target 14a.

Further, in the present image displaying device, a D/A converter 23 and a memory 22 may be also provided as shown in Fig. 2. In this case, within the memory 22, the voltage to be applied on the electrode 1 is previously memoried in order to fly electron beams along the respective tracks of ① to ④, and the data are set so as to be output to the D/A converter 23 by designating the address externally.

The D/A converter 23 is set so as to generate the voltage based on the numerical data output from the memory 22.

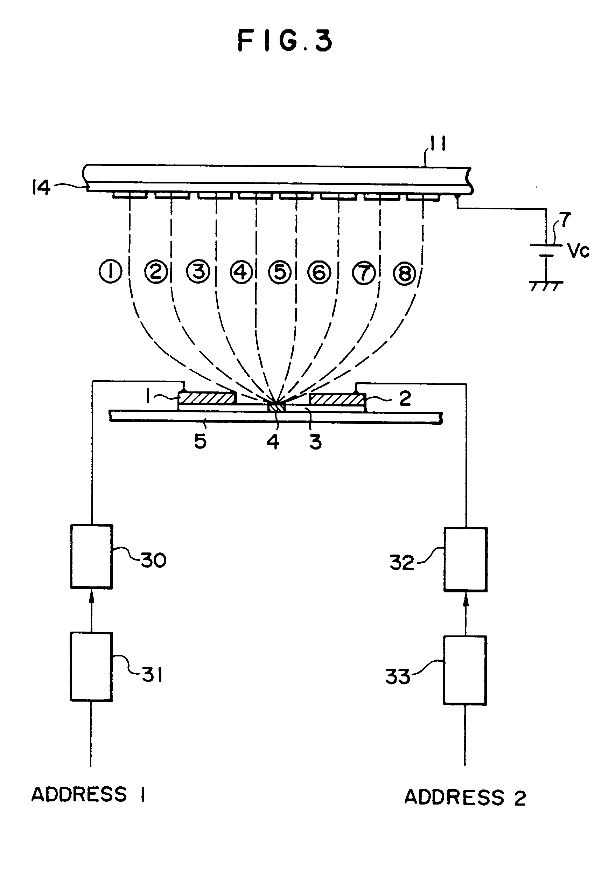

Fig. 3 shows the embodiment in which the form shown in Fig. 2 is used in combination with the form shown in Fig. 1.

In Fig. 3, reference numbers 1 to 5, 7, 11 and 14 have the same constitutions as shown above in Fig. 1, but in this embodiment, for the electrodes 1 and 2, memories 31 and 33, D/A converters 30 and 32 are provided, respectively. By designating addresses externally to the memories 31 and 32, five potentials V1, V2, V3, V4 and O[V] (with proviso V1>V2>V3>V4>0) can be selectively applied on the electrodes 1 and 2. By this, the track of electron beam can be selected from among ① to ⑧ as shown in the Table 3 below.

**Table 3**

| Electron Track | Applied Voltage at the electrode 1 | Applied Voltage at the electrode 2 |
|---|---|---|
| ① | V1 | 0 |
| ② | V2 | 0 |
| ③ | V3 | 0 |
| ④ | V4 | 0 |
| ⑤ | 0 | V1 |
| ⑥ | 0 | V2 |
| ⑦ | 0 | V3 |
| ⑧ | 0 | V4 |
| Non-lighting | 0 | 0 |

In the image displaying device of Fig. 3, which has a means for reversing the direction of current flowing through the electron emitting area at any suitable time by applying a potential difference between the both electrodes so that each electrode may be higher or lower in potential than the other electrode as shown in Fig. 1 and a means for changing the potential difference applied between the both electrodes at any suitable time as shown in Fig. 2 in combination, two or more picture element displays are possible for one electron emitting device are possible.

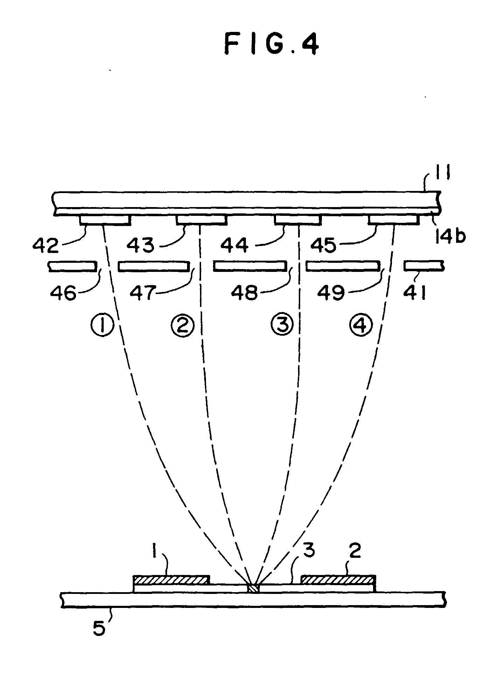

Also, as the unit of the displaying device, the form shown in Fig. 4 can be employed. In the case of this device, by use of the four kinds of combinations shown in Table 4, one desired picture element is the light emitting members 42 to 45 can be permitted to emit light.

**Table 4**

| Electron Track | Applied Voltage at the electrode 1 | Applied Voltage at the electrode 2 |
|---|---|---|
| ① | V1 | 0 |
| ② | V2 | 0 |
| ③ | 0 | V2 |
| ④ | 0 | V1 |
| Note V1>V2>0 | | |

In this case, a plate electrode 41 is held between the surface conduction type of thin film device and the light emitting member. Said plate electrode 41 is provided with holes 46 to 49 for permitting electron beam to transmit therethrough.

Said plate electrode 41 is applied with a voltage lower than the voltage Va (voltage applied to the transparent electrode 14b), and the following effects can be obtained by selecting an appropriate voltage:
(a) Through the lens effect, electron beam is narrowed at the light emitting member surface, and therefore the emitting spot becomes sharp.
(b) Deflection sensitivity becomes greater. That is, as compared with the case when no plate electrode 41 is provided, deflection of electron beam becomes possible with smaller voltage (V1, V2).

As described above, since deflection of electron beam is possible without provision of a deflector at the electron beam emitting source, a displaying device of an extremely simple structure can be used.

As the result, in spite of having the same high luminosity as CRT of the prior art, there may be used a displaying device produced at low cost with a thickness which can be less than half of that of CRT of the prior art.

## Claims

1. A driving method of electron beam emitting devices, each electron emitting device comprising a surface conduction type of thin film device having an electron emitting area (4) and a pair of electrodes (1, 2) for passing current through the electron emitting area and for emitting an electron beam therefrom, wherein in each electron emitting device the track of the emitted electron beam is varied by varying a value of a voltage applied between said pair of electrodes, and wherein the electron beam emitting devices are arranged in a plural number along plural columns and rows.

2. A method according to claim 1, wherein the voltage value which accomplishes a desired track of an emitted electron beam is selected among data consisting of values of plural voltages associated with different electron beam tracks, and the selected voltage value is applied between the pair of electrodes.

3. A driving method of an image displaying device comprising an electron beam emitting device according to claim 1 or 2, comprising a light-emitting member which is irradiated with the electron beam from said electron beam emitting device to form a light-emitting image.

## Patentansprüche

1. Treiberverfahren für Elektronenstrahlemissionsvorrichtungen, von denen jede Elektronenemissionsvorrichtung ein Dünnschichtbauelement vom Oberflächenleitungstyp mit einem Elektronenemissionsflächenbereich (4) und einem Paar Elektroden (1, 2) aufweist, um Strom durch den Elektronenemissionsflächenbereich fließen zu lassen und daraus einen Elektronenstrahl zu emittieren, wobei in jeder Elektronenemissionsvorrichtung die Bahn des emittierten Elektronenstrahls dadurch geändert wird, daß man einen Wert einer an das Elektrodenpaar angelegten Spannung variiert, und wobei die Elektronenstrahlemissionsvorrichtungen in einer Mehrzahl entlang mehrerer Spalten und Reihen angeordnet sind.

2. Verfahren nach Anspruch 1, bei dem
der Spannungswert, der eine gewünschte Bahn eines emittierten Elektronenstrahls bewirkt, unter solchen Daten ausgewählt wird, die aus Werten von mehreren Spannungen bestehen, die unterschiedlichen Elektronenstrahl-Bahnen zugeordnet sind, wobei der ausgewählte Spannungswert an das Elektrodenpaar gelegt wird.

3. Treiberverfahren für eine Bildanzeigevorrichtung mit einer Elektronenstrahlemissionsvorrichtung nach Anspruch 1 oder 2,
umfassend ein Lichtemissionsglied, welches mit dem Elektronenstrahl von der Elektronenstrahlemissionsvorrichtung bestrahlt wird, um ein Lichtemissionsbild zu erzeugen.

## Revendications

1. Procédé de commande pour dispositifs émetteurs de faisceaux d'électrons, chaque dispositif émetteur d'électrons comprenant un type de dispositif à couche mince à conduction surfacique ayant une région émettrice d'électrons (4) et une paire d'électrodes (1, 2) pour faire passer du courant dans la région émettrice d'électrons et pour en émettre un faisceau d'électrons, dans lequel
dans chaque dispositif émetteur d'électrons, le trajet du faisceau d'électrons émis est modifié en faisant varier une valeur d'une tension appliquée entre ladite paire d'électrodes, et
dans lequel les dispositifs émetteurs de faisceaux d'électrons sont agencés en un nombre multiple le long de plusieurs colonnes et rangées.

2. Procédé selon la revendication 1, dans lequel
la valeur de tension qui accomplit un trajet requis d'un faisceau d'électrons émis est sélectionnée parmi des données constituées de valeurs de plusieurs tensions associées à des trajets de faisceaux d'électrons différents, et la valeur de tension sélectionnée est appliquée entre la paire d'électrodes.

3. Procédé de commande d'un dispositif d'affichage d'image comprenant un dispositif émetteur de faisceaux d'électrons selon la revendication 1 ou 2, comprenant un élément émetteur de lumière qui est irradié par le faisceau d'électrons provenant du dispositif émetteur de faisceaux d'électrons afin de former une image émettrice de lumière.
